# EUROPEAN PATENT APPLICATION

(11) **EP 1 503 294 A2**
(43) Date of publication of application: **02.02.2005**
(21) Application number: 04077107.3
(22) Date of filing: 20.07.2004
(51) Int. Cl.: G06F 17/26, G06F 17/60, G03G 21/02, G07F 7/02

(54) **Method and apparatus for managing stocks of consumption units in a system of document processing devices in a network**

(30) Priority: 01.08.2003 EP 03077416
(71) Applicant: Océ-Technologies B.V., 5914 CC Venlo (NL)
(72) Inventor: Kuppens-EllouZ Noura, 5951 JJ Belfeld (NL); Van Den Tillaart Robertus Cornelis W. Th. Maria, 5422 BJ Gemert (NL)
(74) Representative: van Meeteren, Arend Anthonie

(57) **Abstract**

Method for managing stocks of consumption units associated with users in a system of document processing devices connected in a network wherein a plurality of stocks of consumption units is kept on each document processing device, each stock on a document processing device being associated with a user. The method comprises transferring through the network consumption units of a first stock kept on a first document processing device to a second stock kept on a second document processing device as a reaction to an emitted signal. Apparatus comprising a distribution function suited for managing through the network stocks of consumption units on a plurality of document processing devices, said stocks of consumption units being associated with a same user.

## Description

The invention relates to a method for managing stocks of consumption units associated with users in a system of document processing devices connected in a network wherein a plurality of stocks of consumption units is kept on each document processing device, each stock on a document processing device being associated with a user.

The invention also relates to an apparatus for processing document jobs comprising document processing devices connected in a network, each document processing device comprising means for keeping a plurality of stocks of consumption units associated with users.

The invention further relates to a computer program product residing on a computer readable medium comprising instructions for causing at least one process unit to perform the method according to the invention.

Managing stocks of consumption units is particularly of interest in an environment like a public library, a school etc wherein individual users are crediting in advance an account that enables them to use a copier, a printer, a scanner, a workstation with installed software programs or any other document processing device. Generally, the account is filled by the user with currency units and the corresponding amount of money is converted into a stock of consumption units. When a document is generated by a document processing device, consumption units are withdrawn from the stock in payment for the use of the device. The amount of consumption units subtracted from the stock for an executed job may depend on the device, on the number of output sheets, on the quality of print medium, on the document that is printed, on the kind and duration of use of the software etc.

Means for accounting an account using a signal emitted by the document processing device, the account being associated with a user are known among others from US 5,172,398. A copying machine described therein may be provided with accounting means like a connectable key counter, a connectable coin-operated mechanism or a connectable magnetic card reader. Such accounting means are not well suited for processing documents jobs like printing a document in a network environment.

US 6,122,039 discloses accounting means for a document processing apparatus comprising a scanner and printing hardware. Accounting means use a signal from at least one of the scanner and the printing hardware to decrement an account associated with a user. Said means are able to determine how much credit a particular user has to expend on a particular function of the apparatus. The accounting means can have access to currency input means such as a coin slot, or to a credit or debit card input. Although it would be possible to create a network with for example several scanners and printers, the user would still have to interact physically with the accounting means in order to fill the account, using coins or a card. This is cumbersome, especially in the case of a vast network.

US patent application publication 2001/0039498 A1 discloses a charging process management system comprising image input/output devices connected to a network, a broker connected to the input/output devices through the network for providing management to the input/output devices and a service centre connected to the broker. The service centre is for collecting charging information through the broker according to a use status of each of the image input/output devices. It is able to provide registration and management functions of respective user IDs, each user ID indicating one specific user. The problem is that the image input/output devices can not be used by registered users when the network connecting the devices, the broker and the service centre is down.

It is an object of the present invention to provide an improved method for managing stocks of consumption units associated with users in a system of document processing devices connected in a network in which the above-described problems are mitigated.

The above-mentioned object of the present invention is achieved by transferring through the network consumption units of a first stock kept on a first document processing device to a second stock kept on a second document processing device as a reaction to an emitted signal. In an environment like a public library, a school etc, it is common practise that registered users credit in advance a stock of consumption units in order to make use of document processing devices, for example a scanner, a printer, a copier etc. Stocks of consumption units may be managed by a server connected through a network to the devices. For example, the total amount of consumption units may be distributed over several document processing devices. That means that on each of the devices available for the users, a stock is present. Upon emission of a signal, consumption units are transferred from a device to another one, meaning that the user gets access to consumption units kept on a plurality of devices.

According to another aspect of the method according to the invention, transferring consumption units occurs as a reaction of a signal emitted by the second document processing device if a user has requested a document job on said second document processing device. Thus this ensures that enough consumption units are available on the document processing device whereon a document job is requested.

Transferring consumption units may occur as a reaction of a signal emitted by the second document processing device if a requested document job is processed on said second document processing device. The stock of consumption units is thus fed during processing of a document job. After that, if the other devices whereon stocks are located are temporarily unavailable, there is no direct starvation of the device in use, because consumption units have already been transferred.

Preferably, transferring consumption units occurs as a reaction of a signal emitted by the second document processing device if the quantity consumption units of the second stock kept on the second document processing device is less than a pre-determined limit. This precaution ensures that a certain amount of consumption units is available on a device. The pre-determined limit may depend on the device, on the use-behaviour of a user etc.

The apparatus for processing document jobs comprising document processing devices connected in a network, according to the invention is characterised in that the apparatus further comprises a distribution function suited for managing through the network stocks of consumption units on a plurality of document processing devices, said stocks of consumption units being associated with a same user. Thus the distribution function is aware of the quantity of consumption units on the devices connected to the network and an accurate accounting of the stocks can be carried out.

Preferably, the distribution function is suited for transferring consumption units of a first stock kept on a first document processing device to a second stock kept on a second document processing device as a reaction to an emitted signal. Transferring consumption units has the advantage that the user processing a document job on a given device can have at his disposal other consumption units than to the units kept on this given device.

The invention particularly provides an apparatus wherein the distribution function is running on a plurality of processing units on a plurality of document processing devices. This a convenient way of implementing the distribution function.

The invention will now be explained with reference to the following exemplified embodiments of the present invention, and illustrated by reference to the drawings. These embodiments serve to illustrate the invention and should not be regarded as a limitation thereof.
Fig. 1 is an example of a network system wherein the apparatus according to the invention may be implemented.
Fig. 2 shows components and logical functions of an apparatus according to the invention.
Fig. 3 is a flow diagram showing an embodiment of the method according to the invention.
Fig. 4 is a flow diagram showing another embodiment of the method according to the invention.

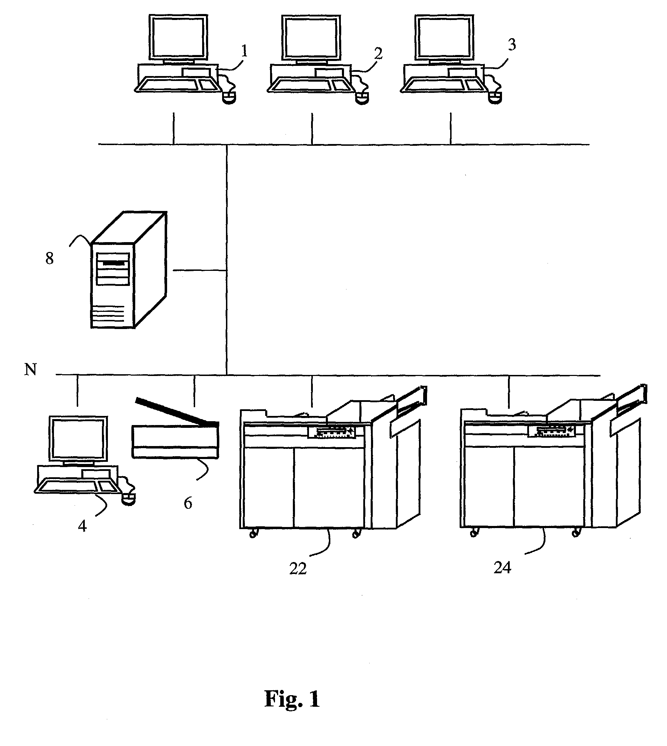

Fig. 1 shows a number of clients which are workstations 1, 2, 3 etc connected to each other and to a server 8 through a local area network (LAN) N. Document processing devices, like a workstation 4, a scanner 6, printer/copiers 22 and 24 are connected to each other through the local area network N. This environment can be installed for example in a public library, in a school etc. Individual users or a pre-defined group of users may use anyone of the workstations 1, 2, 3 etc and send through the network a print job to one of the printers 22 or 24. Users can also use directly one of the document processing devices 4, 6, 22 or 24 when they need, respectively, access a special software or to digital documents installed on the workstation 4 or on another computer connected to the network, to scan a document on scanner 6, or to copy a document on one of the printer/copiers 22 or 24.

In an environment like a public library or a school, it is common practice that users are registered and that they credit with currency units an associated account. An example is a bank-like system wherein the stock is managed by a server 8. The currency units credit of the user is converted into a stock of 'consumption units'. Each time a registered user with a stock sends a print job, uses the scanner 6, or the workstation 4, or makes copies on one of the devices 22 or 24, a number of consumption units is subtracted from his associated stock. The number of units that is subtracted depends on several parameters like software used and duration of use on workstation 4, print medium format, print medium quality, colour, duplex, stapled, number of pages etc on the devices 22 or 24. It might also be that the number of units is depending on the selected document to be printed, for example in a public library where on-line documents are available for registered users. When this bank-like system is used, the server 8 communicates with the connected document processing devices 4, 6, 22 and 24. Each of the connected document processing devices comprises means for sending information to the server about the parameters of the job required by the user. When the job is actually processed, consumption units are subtracted from the user stock.

The apparatus according to an embodiment of the invention is now described. In a public library, for example, new users or already registered users can fill up their credit with currency units at a desk. The currency units credit of a registered user is converted into a credit of consumption units and this credit divided into stocks of consumption units which are kept on several document processing devices. For example, the central server 8 can be provided with a distribution function running on a processor (CPU) which divides the credit of a user into stocks of consumption units to be distributed on a plurality of devices. For example, a user has credited his account in a such a way that it comprises in total 80 consumption units. The distribution function distributes the amount of consumption units on the devices on which the user has authorised access. For example, for a new user, the stock of the workstation 4 can be credited by 20 consumption units, the scanner 6 can be credited by 20 consumption units and the same holds for each of the printer/copiers 22 and 24. In the case that the user is already known to the distribution function, preferably the distribution function is aware of a certain behaviour of user. For example, the function is aware that the user often makes use of the devices 6 and 22 and less often use of the devices 4 and 24, and the distribution function is crediting the stocks of devices 4 and 24 by less consumption units (for example 5 units per device) and is crediting the devices 6 and 22 by more units (for example, 35 per device).

A user wanting to use a document processing device identifies himself on the chosen device. When a user starts to use one the devices 4, 6, 22 or 24, consumption units are withdrawn from the corresponding stock kept on the device in use. If the server is not available at the moment that a user wants to use any of the document processing devices, the user can still carry out the desired job. Since a stock filled up with consumption units is kept on the devices, the job can be carried out and consumption units withdrawn from the local stock. It is not required that the server 8 is reachable at that moment.

When the server is available, and a user has started to use a device, the distribution function of the server 8 notices that consumption units are subtracted from the stock of the device in use. For example, if a user starts to use the device 22 for copying documents, 20 consumption units are available at the beginning. To avoid that the stock of device 22 reaches zero, in which case the user would be impaired to further use the device, the distribution function transfers consumption units, for example from the devices connected to the network, in that case the devices 4, 6, and 24. The distribution function may transfer 10 consumption units from each of the stocks located on the devices 4, 6 and 24, that is 30 consumption units in total to the device in use. If the user goes on with the copying jobs, consumption units may be transferred again in a similar way. When the user has finished the copying job, consumption units may be transferred back. In this embodiment wherein the distribution function is placed on the server, the consumption units are located on the devices themselves, except during the transfers. If the server is temporarily unavailable, the copy job can be started since consumption units are already available on the stock kept on the device. If the server is temporarily unavailable but consumption units have been transferred to the device in use, more units are available on the device and that more copies can be output than if no transfer had taken place. Possibly, the server becomes available again during the time the copying job is processed.

The transfer from a stock kept on a first device to a stock kept on a second device may take place when the amount of consumption unit of the stock kept on the second device is less than a pre-determined limit. The distribution function may recognise a certain consumption behaviour of the user. This ensures that consumption units are provided to devices according to a certain behaviour on that device. The distribution function may also take care that consumption units are transferred to the devices at certain moments in time, depending on consumption behaviour of the user. For example, the distribution function may recognise that a given user is using a device preferably on certain days of the week or at certain periods of a month or year. The distribution function is thus able to transfer the consumption units such that more units are available on the device at certain periods in time.

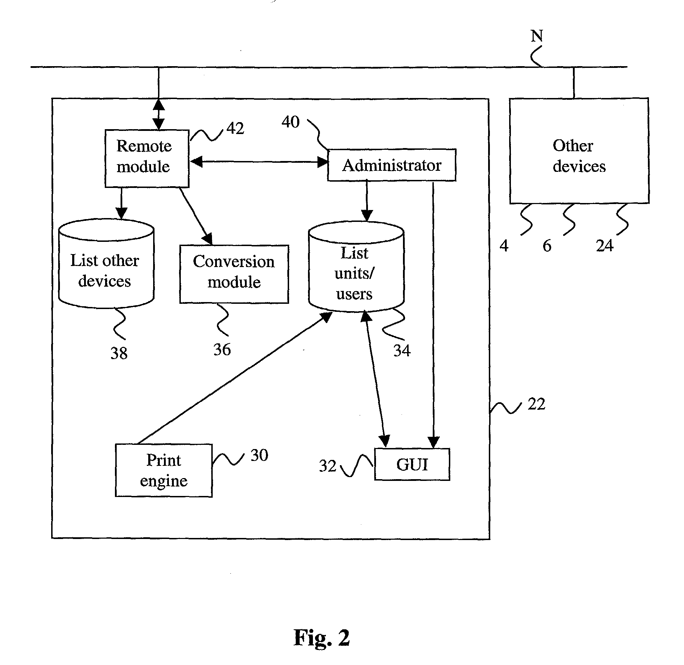

As shown in Fig. 2, the method according to the invention may be implemented on a distributed architecture. In that case, a central server is not required. Instead, a distribution function is provided that may be executed by a number of processing units (CPUs) on the document processing devices. The printer/copier device 22 comprises a print engine 30 and a Graphical User Interface (GUI) 32 whereon a registered user can log on. The remote module 42 is able to communicate with other devices 4, 6, 24 through the network N. It may thus request consumption units from other devices, also comprising a remote module (not shown). Other devices 4, 6, 24 may request units through the remote module to the device 22. The pecuniary value of a consumption unit may be device independent. A consumption unit is thus a basic unit and a document job on a device is charged for with a certain amount of units. Consumption units may be transferred without conversion from a device to another and the fee in consumption units charged for a document job is device-dependent. On the other hand, the pecuniary value of a consumption unit may be device dependent. The printer/copier device 22 may be provided with a conversion module 36. This is useful in the case that consumption units having a device-dependent pecuniary value are transferred from a first device to another one, for example device 22. A conversion module on the first device converts the value of a consumption unit to be transferred into currency units. Then a certain amount of currency units is transferred to the device 22, and the conversion module 36 can convert this credit into consumption units and vice-versa. The conversion module is particularly useful in the case that a consumption unit on a device has not the same value (expressed in currency units) as on other devices. By way of example, the device 22 is a colour printer whereon the value of a consumption unit is 25 currency units, while device 24 is a monochrome printer whereon the value of a consumption unit is 3 currency units. When a consumption unit of device 22 is transferred to the device 24, the conversion module 36 converts it into the equivalent amount of currency units and a conversion module on the device 24 (not shown) converts the amount of currency units into consumption units for the device 24. It is a convenient and exact way of converting consumption units from a device to another one. The administrator 40 is a module for managing a list 34 of stocks of consumption units associated with users. It is suited for requesting transfers of consumption units. Such a request is sent to the remote module, having access to the list of other devices 38 and to the local area network N. The remote module 42, the administrator 40 and the conversion module 36 are logical functions executable by a CPU (not shown) installed on the device 22. The other devices are provided with comparable elements, in such a way that a distributed architecture can be easily implemented.

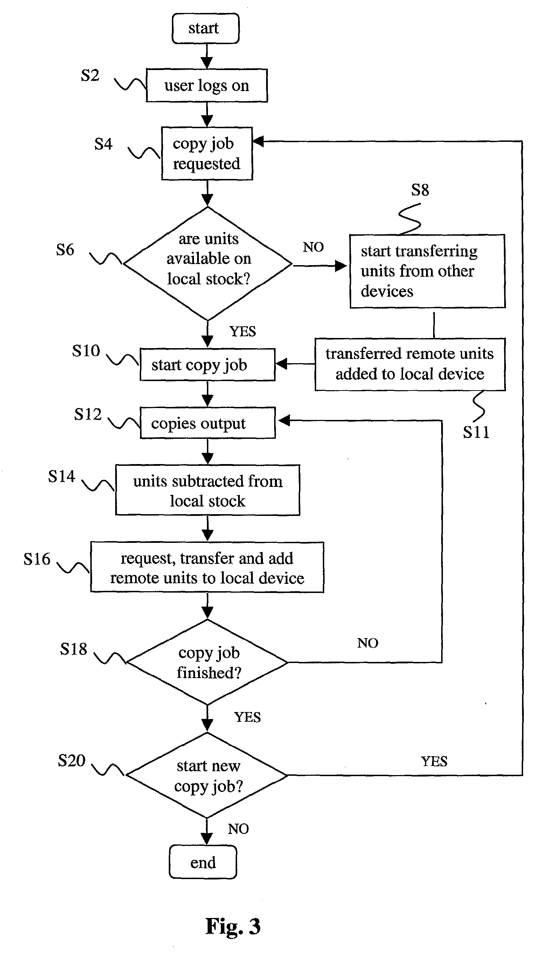

Fig. 3 is an embodiment of the method according to the invention. In this example, a distributed architecture is used and a central server is not required for transferring consumption units. A registered user logs on (S2) and identifies himself using for example a pin code. In the example, the user is logged on device 22 and wants to carry out a copy job. Obviously, the described method applies for any document job that can be performed on any of the document processing devices 4, 6, 22, 24 connected to the network N, like performing a print job, scanning a document, or using a workstation 4.The copy job is thus requested (S4) and it is checked (S6) whether consumption units are available on the device 22. If it comes out that no consumption unit is available on the device 22, a signal is emitted by the device 22 and remote units are requested by the distribution function to the other devices 4, 6, 24. The transfer of consumption units starts (S8), remote units are added (S11) to the stock of the device 22 and the copy job is started (S10). Copies are output (S12) and consumption units are subtracted from the local stock of units (S14). Request, transfer and addition of remote units to the local device may be performed again (S16). This has the advantage that even more units are available on the device currently in use. In particular, this is interesting in the case that the other devices become unavailable due to failure of one or several other devices 4, 6, 24 after S16 has been performed. If the job is finished (S18), the user can request another copy job (S20) and the steps S6 to S18 are repeated. In a variant of this embodiment, the steps S8 and S11 of transferring and adding units to the stock on the device 22 can be performed concurrently with the steps S10, S12 and S14.

In the embodiment shown in Fig. 3, if the stock of units of the selected device is empty, the document job is started after transferring remote units to the selected local device. In another embodiment and in order to ensure that the user can start without delay the document job, the job is started as soon as possible after the request and a debit of units is written. Concurrently, the distribution function is requesting the transfer of remote units from other devices. The requested units are transferred and the debit of units that had been written is erased.

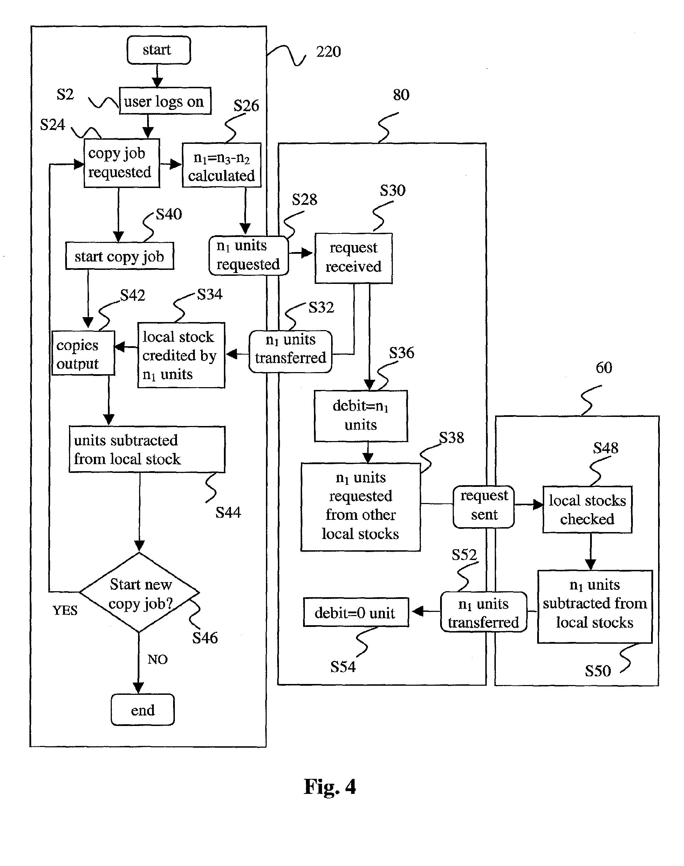

Fig. 4 shows another embodiment of the method according to the invention, wherein the distribution function is installed on a server. Reference 220 indicates the processes occurring on the document processing device 22 in use, reference 80 indicates the processes on the server 8, and reference 60 indicates the processes on the other devices 4, 6, 24. In this example, again, the user requests a copy job. Obviously, the described method applies for any document job that can be performed on any of the document processing devices 4, 6, 22, 24 connected to the network N, like performing a print job, scanning a document, or using a workstation 4. In a similar way as described above, the user logs on (S2) and requests a copy job (S24). The local stock n₂ of units on the device 22 is compared to the amount of units n₃ needed to execute the copy job (S26). In the example, n₃ is larger than n₂ and thus it comes out that n₁ units are needed to perform the job, wherein n₁ is the difference between n₃ and n₂. A request of n₁ units is sent (S28) by the device 22 to the server 8. Concurrently, the copy job is started (S40) and copies are output (S42).The server 8 receives the request (S30) sent by the device 22. As a response, the server 8 transfers (S32) the requested n₁ units to the device 22. On the device 22, the n₁ units are added to the local stock (S34) while the copy job is executed (S42). In the mean time, a function on the server 8 is writing a temporary debit (S36) of n₁ units and links it to the stock of the user of the device 22. The server is requesting (S38) n₁ units from the other devices connected to the network. Said request is sent to the other devices 4, 6, 24 and the local stocks associated with the same user are checked (S48) and n₁ units are subtracted (S50) from the stocks of consumption units of said devices. n₁ units are then sent to the server 8 (S52), which erases the debit that was temporary written, such that the debit reaches zero (S54). Concurrently, on the device 22, processing of the copy job continues i.e. copies are output (S42) and consumed units are subtracted (S44) from the local stock. When the job is finished, the user can decide to start another job (S46) in which case the steps S24 to S44 are repeated. Otherwise, the program is terminated.

## Claims

1. Method for managing stocks of consumption units associated with users in a system of document processing devices connected in a network wherein a plurality of stocks of consumption units is kept on each document processing device, each stock on a document processing device being associated with a user, **characterised in that** the method comprises transferring through the network consumption units of a first stock kept on a first document processing device to a second stock kept on a second document processing device as a reaction to an emitted signal.

2. Method for managing stocks of consumption units according to claim 1, **characterised in that** transferring consumption units occurs as a reaction of a signal emitted by the second document processing device if a user has requested a document job on said second document processing device.

3. Method for managing stocks of consumption units according to claim 1, **characterised in that** transferring consumption units occurs as a reaction of a signal emitted by the second document processing device if a requested document job is being processed on said second document processing device.

4. Method for managing stocks of consumption units according to claim 1, **characterised in that** transferring consumption units occurs as a reaction of a signal emitted by the second document processing device if the quantity consumption units of the second stock kept on the second document processing device is less than a pre-determined limit.

5. Method for managing stocks of consumption units according to claim 1, **characterised in that** transferring consumption units occurs as a reaction of signal emitted time dependently through the network.

6. Method for managing stocks of consumption units according to claim 1, **characterised in that** transferring consumption units occurs as a reaction of a signal emitted through the network, the signal being dependent on a consumption behaviour of the user.

7. Method for managing stocks of consumption units according to any of the preceding claims, **characterised in that** the method further comprises converting currency units into consumption units.

8. Apparatus for processing document jobs comprising document processing devices connected in a network, each document processing device comprising means for keeping a plurality of stocks of consumption units associated with users **characterised in that** the apparatus further comprises a distribution function suited for managing through the network stocks of consumption units on a plurality of document processing devices, said stocks of consumption units being associated with a same user.

9. Apparatus for processing document jobs according to claim 8, **characterised in that** the distribution function is suited for transferring consumption units of a first stock kept on a first document processing device to a second stock kept on a second document processing device as a reaction to an emitted signal.

10. Apparatus for processing document jobs according to claim 8 or 9, **characterised in that** the distribution function is running on a processing unit of a server connected to the network.

11. Apparatus for processing document jobs according to claim 8 or 9 wherein each document processing device comprises a processing unit, **characterised in that** the distribution function is running on a plurality of processing units on a plurality of document processing devices.

12. Computer program product residing on a computer readable medium comprising instructions for causing at least one process unit to perform the method of any of the claims 1-7.
